# EUROPEAN PATENT APPLICATION

(11) **EP 3 512 244 A1**
(43) Date of publication of application: **17.07.2019**
(21) Application number: 17854968.9
(22) Date of filing: 28.09.2017
(51) Int. Cl.: H04W 28/24

(54) **DATA TRANSMISSION METHOD, DEVICE AND SYSTEM**

(30) Priority: 30.09.2016 CN 201610877498
(71) Applicant: Huawei Technologies Co., Ltd., Longgang District Shenzhen, Guangdong 518129 (CN)
(72) Inventor: TANG, Xun, Shenzhen Guangdong 518129 (CN); QUAN, Wei, Shenzhen Guangdong 518129 (CN)
(74) Representative: Thun, Clemens
(86) International application number: PCT/CN2017/104104
(87) International publication number: WO 2018/059518

(57) **Abstract**

This application relates to the mobile communications field, and in particular, to data transmission technologies in a wireless communications system. This application provides a data transmission method, an apparatus, and a system. In the solutions, the base station maps, according to QoS indication information of a first data packet, the first data packet to a first DRB belonging to an EPS bearer, where the EPS bearer includes N DRBs, and N is greater than or equal to 2; and the base station sends the first data packet to a terminal device by using the first DRB. One EPS bearer includes a plurality of DRBs, thereby reducing a quantity of bearers and bearer setup signaling. In addition, the plurality of DRBs can satisfy different QoS requirements.

## Description

This application claims priority to Chinese Patent Application No. 201610877498.9, filed with the Chinese Patent Office on September 30, 2016 and entitled "DATA TRANSMISSION METHOD, APPARATUS, AND SYSTEM", which is incorporated herein by reference in its entirety.

### TECHNICAL FIELD

The present invention relates to the field of wireless communications technologies, and in particular, to a data transmission method, an apparatus, and a system.

### BACKGROUND

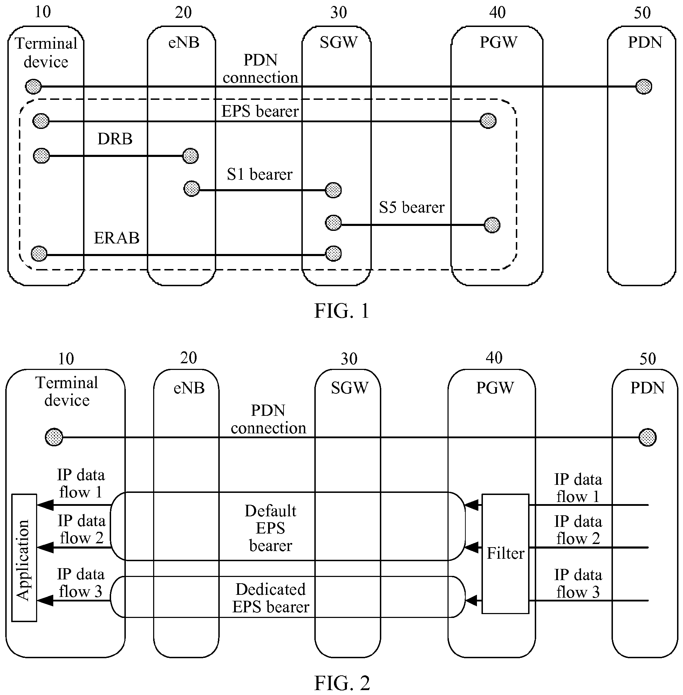

In an LTE (Long Term Evolution, Long Term Evolution) system, an IP (Internet Protocol, Internet Protocol) connection between a terminal device and a PDN (packet data network, packet data network) is referred to as a PDN connection or an EPS (evolved packet system, evolved packet system) session, and a PDN connection may include a plurality of EPS bearers. Each EPS bearer includes three parts: a DRB (data radio bearer, data radio bearer) between a terminal device and an eNB, an S1 bearer between an eNB (evolved nodeB, evolved NodeB) and an SGW (serving gateway, serving gateway), and an S5 bearer between an SGW and a PGW (PDN gateway, PDN gateway), as shown in FIG. 1. In addition, cascading between the DRB and the S1 bearer is referred to as an E-RAB (E-UTRAN Radio Access Bearer, E-UTRAN radio access bearer), where E-UTRAN is evolved UTRAN (Universal Terrestrial Radio Access Network, Universal Terrestrial Radio Access Network). The E-RAB, the DRB, and the EPS bearer are in a one-to-one correspondence.

QoS (quality of service, quality of service) management of data transmission is based on the EPS bearer, and each EPS bearer corresponds to a QoS requirement (or a QoS demand), that is, a group of QoS parameters including a QCI (QoS class identifier), an ARP (allocation and retention priority, allocation and retention priority), a GBR (guaranteed bit rate, guaranteed bit rate), an MBR (maximum bit rate, maximum bit rate or maximum bit rate), and the like. When a terminal device is registered with a network, a default EPS bearer satisfying a default QoS requirement is set up, the default QoS requirement is a part of subscription data of the terminal device, and the default EPS bearer is a non-GBR (Non-guaranteed bit rate, non-guaranteed bit rate) bearer. After the default EPS bearer is set up, uplink data and downlink data of the terminal device are all transmitted on the default EPS bearer. When the default QoS requirement cannot satisfy a requirement of the terminal device, the network sets up a dedicated EPS bearer for the terminal device, where the dedicated EPS bearer corresponds to a QoS requirement and may be a GBR bearer or a non-GBR bearer.

A downlink data flow is used as an example. A PDN sends several IP data flows to a PGW for a terminal device. The PGW first performs filtering classification processing on the IP data flows, identifies different QoS requirements corresponding to the different IP data flows, and maps the IP data flows into different EPS bearers to transmit the IP data flows to the terminal device, as shown in FIG. 2.

In an existing LTE system, one EPS bearer includes one DRB and supports one QoS. On a base station side, one DRB supports one QoS. If data transmission requires new QoS, an EPS bearer needs to be set up. As shown in 1, on a base station side, an EPS bearer setup process is complex and network overheads are high.

### SUMMARY

This application provides a data transmission method, an apparatus, and a system. In this application, one EPS bearer may include a plurality of DRBs, and the plurality of DRBs can satisfy different QoS requirements. Because a quantity of bearers is reduced while QoS requirements are satisfied, bearer setup signaling is reduced in a bearer setup procedure.

According to a first aspect, an embodiment of this application provides a data transmission method. The method includes:
determining, by a base station, to-be-sent first data packet; mapping, by the base station according to QoS indication information of the first data packet, the first data packet to a first DRB belonging to an EPS bearer, where the EPS bearer includes N DRBs, and N is an integer greater than or equal to 2; and sending, by the base station, the first data packet to a terminal device by using the first DRB. Because one EPS bearer includes a plurality of DRBs, the plurality of DRBs can satisfy different QoS requirements. Because a quantity of bearers is reduced while QoS requirements are satisfied, bearer setup signaling is reduced in a bearer setup procedure.

Optionally, the mapping, by the base station according to QoS indication information of the first data packet, the first data packet to a first DRB belonging to an EPS bearer includes:
mapping the first data packet to the first DRB, where QoS of the first DRB matches the QoS indication information of the first data packet.

The QoS indication information may be a specific QoS parameter (for example, a QCI or an MBR), or may be an index number (used to correspond to a group of QoS parameters in a QoS profile) of a QoS profile (QoS profile). The QoS indication information may alternatively be an indicator requirement, for example, a latency requirement.

That QoS of the first DRB matches the QoS indication information of the first data packet means that indication information included in QoS of the first data packet is the same as at least one parameter in the QoS of the first DRB; or indication information included in QoS of the first data packet is the same as at least one indicator in the QoS of the first DRB. Because there may be many QoS requirements of data packets and QoS requirements greatly exceed a quantity of DRBs, data packet QoS can be satisfied as much as possible through mapping. In addition, no corresponding DRB is set up for each QoS requirement, so that resources can be saved.

Optionally, when the base station maps the first data packet according to the QoS indication information of the first data packet, if there is no DRB matching the QoS indication information of the first data packet, the base station sends the first data packet by using a default DRB. Because a DRB satisfying a QoS requirement of the first data packet cannot be found on a base station side, the first data packet is sent by using the default DRB, so that system overheads can be reduced.

Optionally, the base station sends first signaling for configuring M DRBs to the terminal device. The first signaling is used to instruct the terminal device to configure the M DRBs, M is a positive integer, the M DRBs are all in an inactive state, and the first DRB is one of the M DRBs. For a service corresponding to uncommon QoS, a DRB may not be activated after being configured and is activated after there is to-be-sent data. Because a DRB is not activated after being configured, no resource is occupied, thereby saving resources.

Optionally, when the first DRB is in the inactive state, the base station sends second signaling or a MAC SDU (Media Access Control service data unit, Media Access Control service data unit) to the terminal device, where the second signaling or the MAC SDU is used to activate the first DRB, a MAC subheader corresponding to the MAC SDU includes an LCID (logical channel identifier, logical channel identifier), and the LCID is used to indicate the first DRB. A DRB on the base station side may be associated with a DRB on a terminal device side by using the LCID. A data packet on a DRB having a same LCID as that of the DRB on the terminal device side is received on the DRB on the terminal device side. For a service corresponding to uncommon QoS, a DRB may not be activated after being configured and is activated after there is to-be-sent data. Because a DRB is not activated after being configured and is activated when there is a requirement, resource occupation of a memory and a timer (timer) of the terminal device can be reduced.

Optionally, the base station sends third signaling to the terminal device, where the third signaling is used to instruct the terminal device to set up the first DRB. The DRB is set up in advance, so that a time for which the base station waits to send data can be reduced.

Optionally, the first DRB includes a first logical channel, the first logical channel is mapped to a first transmission channel, the first transmission channel is one of a plurality of downlink transmission channels, and transmission channel types or configured physical transmission resources of at least two of the plurality of downlink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

According to a second aspect, an embodiment of this application provides a data transmission method. The method includes:
receiving, by a terminal device, a first data packet from a base station, and mapping the first data packet to a first DRB based on an LCID, where the first DRB belongs to an EPS bearer, the EPS bearer includes N DRBs, and N is an integer greater than or equal to 2. Because one EPS bearer includes a plurality of DRBs, the plurality of DRBs can satisfy different QoS requirements. Because a quantity of bearers is reduced while QoS requirements are satisfied, bearer setup signaling is reduced in a bearer setup procedure. A DRB on a base station side may be associated with a DRB on a terminal device side by using the LCID. A data packet that is sent by the base station and that is on a DRB having a same LCID as that of the DRB on the terminal device side is received on the DRB on the terminal device side.

Optionally, the terminal device receives first signaling for configuring M DRBs, where the first signaling is used to instruct the terminal device to configure the M DRBs, M is a positive integer, the M DRBs are all in an inactive state, and the first DRB is one of the M DRBs. For a service corresponding to uncommon QoS, a DRB may not be activated after being configured and is activated after there is to-be-sent data. Because a DRB is not activated after being configured, no resource is occupied, thereby saving resources.

Optionally, the terminal device receives second signaling or a MAC SDU, where the second signaling or the MAC SDU is used to instruct the terminal device to activate the first DRB, a MAC subheader corresponding to the MAC SDU includes an LCID, and the LCID is used to indicate the first DRB. A DRB on the base station side may be associated with a DRB on the terminal device side by using the LCID. A data packet that is sent by the base station and that is on a DRB having a same LCID as that of the DRB on the terminal device side is received on the DRB on the terminal device side. For a service corresponding to uncommon QoS, a DRB may not be activated after being configured and is activated after there is to-be-sent data. Because a DRB is not activated after being configured and is activated when there is a requirement, resource occupation of a memory and a timer (timer) of the terminal device can be reduced.

Optionally, the terminal device receives third signaling, where the third signaling is used to instruct the terminal device to set up the first DRB. The DRB is set up in advance, so that a waiting time of data sending can be reduced.

Optionally, the first DRB includes a first logical channel, the first logical channel is mapped to a first transmission channel, the first transmission channel is one of a plurality of downlink transmission channels, and transmission channel types or configured physical transmission resources of at least two of the plurality of downlink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

According to a third aspect, an embodiment of this application provides a data transmission method. The method includes:
determining, by a terminal device, a to-be-sent second data packet, and mapping, according to QoS indication information of the second data packet, the second data packet to a second DRB belonging to an EPS bearer, where the EPS bearer includes P DRBs, and P is an integer greater than or equal to 2; and sending, by the terminal device, the second data packet to a base station by using the second DRB. Because one EPS bearer includes a plurality of DRBs, the plurality of DRBs can satisfy different QoS requirements. Because a quantity of bearers is reduced while QoS requirements are satisfied, bearer setup signaling is reduced in a bearer setup procedure.

Optionally, the mapping, by the terminal device according to QoS indication information of the second data packet, the second data packet to a second DRB includes: mapping the second data packet to the second DRB, where QoS indication information of the second DRB matches the QoS indication information of the second data packet.

The QoS indication information may be a specific QoS parameter (for example, a QCI or an MBR), or may be an index number (used to correspond to a group of QoS parameters in a QoS profile) of a QoS profile (QoS profile), or may be a single indicator requirement (for example, a latency requirement).

That QoS of the first DRB matches QoS indication information of the first data packet means that indication information included in QoS of a first data packet is the same as at least one parameter in the QoS of the first DRB; or indication information included in QoS of the first data packet is the same as at least one indicator in the QoS of the first DRB. Because there may be many QoS requirements of data packets and QoS requirements greatly exceed a quantity of DRBs, data packet QoS can be satisfied as much as possible though mapping. In addition, no corresponding DRB is set up for each QoS requirement, so that resources can be saved.

Optionally, the terminal device receives fourth signaling for configuring M DRBs, where the fourth signaling is used to instruct the terminal device to configure the M DRBs, M is a positive integer, the M DRBs are all in an inactive state, and the second DRB is one of the M DRBs. For a service corresponding to uncommon QoS, a DRB may not be activated after being configured and is activated after there is to-be-sent data. Because a DRB is not activated after being configured, no resource is occupied, thereby saving resources.

Optionally, the terminal device receives fifth signaling, where the fifth signaling instructs the terminal device to activate the second DRB. For a service corresponding to uncommon QoS, a DRB may not be activated after being configured and is activated after there is to-be-sent data. Because a DRB is not activated after being configured, no resource is occupied, thereby saving resources.

Optionally, the terminal device receives sixth signaling, where the sixth signaling is used to instruct the terminal device to set up the second DRB. The DRB is set up in advance, so that a waiting time of data sending can be reduced.

Optionally, when the terminal device performs mapping between the second data packet and the second DRB according to the QoS indication information of the second data packet, if there is no DRB matching the second data packet, the second data packet is sent by using a default DRB. Because a DRB satisfying a QoS requirement of the first data packet cannot be found, the terminal device sends the first data packet by using the default DRB, so that system overheads can be reduced.

Optionally, the sending the second data packet by using a default DRB includes: a header of the second data packet includes a request for setting up the second DRB; or a header of the second data packet includes a request for activating the second DRB. The header of the data packet includes indication information, used to request to activate or set up the DRB, so that signaling overheads can be reduced.

Optionally, the terminal device sends seventh signaling, where the seventh signaling is a request for activating or setting up the second DRB.

Optionally, the terminal device activates the second DRB based on QoS of the to-be-sent second data packet. Because there is no signaling process for activating the DRB, the terminal device activates the second DRB by using the QoS of the second data packet, thereby reducing a sending latency of the second data packet and signaling overheads.

Optionally, the second DRB includes a second logical channel, the second logical channel is mapped to a second transmission channel, the second transmission channel is one of a plurality of uplink transmission channels, and transmission channel types or configured physical transmission resources of at least two of the plurality of uplink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

According to a fourth aspect, an embodiment of this application provides a data transmission method. The method includes:
receiving, by a base station, a second data packet from a terminal device, and mapping the second data packet to a second DRB based on an LCID, where the second DRB belongs to an EPS bearer, the EPS bearer includes P DRBs, and P is an integer greater than or equal to 2. Because one EPS bearer includes a plurality of DRBs, the plurality of DRBs can satisfy different QoS requirements. Because a quantity of bearers is reduced while QoS requirements are satisfied, bearer setup signaling is reduced in a bearer setup procedure.

Optionally, the base station sends fourth signaling for configuring M DRBs to the terminal device, where the fourth signaling is used to instruct the terminal device to configure the M DRBs, M is a positive integer, the M DRBs are all in an inactive state, and the second DRB is one of the M DRBs. For a service corresponding to uncommon QoS, a DRB may not be activated after being configured and is activated after there is to-be-sent data. Because a DRB is not activated after being configured, no resource is occupied, thereby saving resources.

Optionally, the base station sends fifth signaling to the terminal device, where the fifth signaling is used to instruct the terminal device to activate the second DRB. For a service corresponding to uncommon QoS, a DRB may not be activated after being configured and is activated after there is to-be-sent data. Because a DRB is not activated after being configured and is activated when there is a requirement, resource occupation of a memory and a timer (timer) of the terminal device can be reduced.

Optionally, the base station sends sixth signaling to the terminal device, where the sixth signaling is used to instruct the terminal device to set up the second DRB. The DRB is set up in advance, so that a waiting time of data sending can be reduced.

Optionally, the base station receives seventh signaling, where the seventh signaling is a request for activating or setting up the second DRB. The DRB is set up in advance, so that a time for which the base station waits to receive data can be reduced. A DRB is activated after there is to-be-received data. Because a DRB is not activated after being configured and is activated when there is a requirement, resources of the base station are saved.

Optionally, the base station receives the second data packet by using a default DRB, where a header of the second data packet includes a request for setting up or activating the second DRB. The header of the data packet includes indication information, used to request to activate or set up the DRB, so that signaling overheads can be reduced.

Optionally, the second DRB includes a first logical channel, the first logical channel is mapped to a first transmission channel, the first transmission channel is one of a plurality of downlink transmission channels, and transmission channel types or configured physical transmission resources of at least two of the plurality of uplink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

According to a fifth aspect, an embodiment of this application provides a base station. The base station has a function of implementing behavior of the base station in the foregoing method design. The function may be implemented by hardware, or may be implemented by hardware executing corresponding software. The hardware or software includes one or more modules corresponding to the foregoing function.

The base station includes:
a processing unit, configured to: determine to-be-sent first data packet; and map, according to QoS indication information of the first data packet, the first data packet to a first DRB belonging to an EPS bearer, where the EPS bearer includes N DRBs, N is greater than or equal to 2, because one EPS bearer includes a plurality of DRBs, the plurality of DRBs can satisfy different QoS requirements; and because a quantity of bearers is reduced while QoS requirements are satisfied, bearer setup signaling is reduced in a bearer setup procedure; and
a sending unit, configured to send the first data packet to a terminal device by using the first DRB.

Optionally, QoS of the first DRB matches the QoS indication information of the first data packet. The QoS indication information may be a specific QoS parameter (for example, a QCI or an MBR), or may be an index number (used to correspond to a group of QoS parameters in a QoS profile) of a QoS profile (QoS profile), or may be a single indicator requirement (for example, a latency requirement). That QoS of the first DRB matches the QoS indication information of the first data packet means that indication information included in QoS of the first data packet is the same as at least one parameter in the QoS of the first DRB; or indication information included in QoS of the first data packet is the same as at least one indicator in the QoS of the first DRB. Because there may be many QoS requirements of data packets and QoS requirements greatly exceed a quantity of DRBs, data packet QoS can be satisfied as much as possible through mapping. In addition, no corresponding DRB is set up for each QoS requirement, so that resources can be saved.

Optionally, the sending unit is further configured to: when the processor maps the first data packet according to the QoS indication information of the first data packet, if there is no DRB matching QoS of the first data packet, send the first data packet by using a default DRB. Because a DRB satisfying a QoS requirement of the first data packet cannot be found, the first data packet is sent by using the default DRB, so that system overheads can be reduced.

Optionally, the sending unit is further configured to send first signaling for configuring M DRBs to the terminal device, where the first signaling is used to instruct the terminal device to configure the M DRBs, M is a positive integer, the M DRBs are all in an inactive state, and the first DRB is one of the M DRBs. For a service corresponding to uncommon QoS, a DRB may not be activated after being configured and is activated after there is to-be-sent data. Because a DRB is not activated after being configured and is activated when there is a requirement, resources are saved.

Optionally, when the first DRB is in the inactive state, the sending unit is further configured to send second signaling or a MAC SDU to the terminal device, where the second signaling or the MAC SDU is used to activate the first DRB, a MAC subheader corresponding to the MAC SDU includes an LCID, and the LCID is used to indicate the first DRB. A DRB on a base station side may be associated with a DRB on a terminal device side by using the LCID. A data packet on a DRB having a same LCID as that of the DRB on the terminal device side is received on the DRB on the terminal device side. For a service corresponding to uncommon QoS, a DRB may not be activated after being configured and is activated after there is to-be-sent data. Because a DRB is not activated after being configured and is activated when there is a requirement, resources of the base station and the terminal device are saved.

Optionally, the sending unit is further configured to send third signaling to the terminal device, where the third signaling is used to instruct the terminal device to set up the first DRB. The DRB is set up in advance, so that a waiting time of data sending can be reduced.

Optionally, the first DRB includes a first logical channel, the first logical channel is mapped to a first transmission channel, the first transmission channel is one of a plurality of downlink transmission channels, and transmission channel types or configured physical transmission resources of at least two of the plurality of downlink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

According to a sixth aspect, an embodiment of this application provides another terminal device. The terminal device has a function for implementing behavior of the terminal device in the foregoing method design. The function may be implemented by hardware, or may be implemented by hardware executing corresponding software. The hardware or software includes one or more modules corresponding to the foregoing function. The modules may be software and/or hardware.

The terminal device includes:
a receiving unit, configured to receive a first data packet from a base station; and
a processing unit, configured to map the first data packet to a first DRB based on an LCID, where the first DRB belongs to an EPS bearer, the EPS bearer includes N DRBs, and N is an integer greater than or equal to 2. Because one EPS bearer includes a plurality of DRBs, the plurality of DRBs can satisfy different QoS requirements. Because a quantity of bearers is reduced while QoS requirements are satisfied, bearer setup signaling is reduced in a bearer setup procedure. A DRB on a base station side may be associated with a DRB on a terminal device side by using the LCID. A data packet that is sent by the base station and that is on a DRB having a same LCID as that of the DRB on the terminal device side is received on the DRB on the terminal device side.

Optionally, the receiving unit is further configured to receive first signaling for configuring M DRBs, where the first signaling is used to instruct the terminal device to configure the M DRBs, M is a positive integer, the M DRBs are all in an inactive state, and the first DRB is one of the M DRBs. For a service corresponding to uncommon QoS, a DRB may not be activated after being configured and is activated after there is to-be-sent data, thereby saving resources.

Optionally, the receiving unit is further configured to receive second signaling or a MAC SDU, where the second signaling or the MAC SDU is used to instruct the terminal device to activate the first DRB, a MAC subheader corresponding to the MAC SDU includes an LCID, and the LCID is used to indicate the first DRB. A DRB on the base station side may be associated with a DRB on the terminal device side by using the LCID. A data packet that is sent by the base station and that is on a DRB having a same LCID as that of the DRB on the terminal device side is received on the DRB on the terminal device side. For a service corresponding to uncommon QoS, a DRB may not be activated after being configured and is activated after there is to-be-sent data. Because a DRB is not activated after being configured and is activated when there is a requirement, resource occupation of a memory and a timer (timer) of the terminal device can be reduced.

Optionally, the receiving unit is further configured to receive third signaling, where the third signaling is used to instruct the terminal device to set up the second DRB. The DRB is set up in advance, so that a waiting time of data sending can be reduced.

Optionally, the first DRB includes a first logical channel, the first logical channel is mapped to a first transmission channel, the first transmission channel is one of a plurality of downlink transmission channels, and transmission channel types or configured physical transmission resources of at least two of the plurality of downlink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

According to a seventh aspect, an embodiment of this application provides another terminal device. The terminal device has a function for implementing behavior of the terminal device in the foregoing method design. The function may be implemented by hardware, or may be implemented by hardware executing corresponding software. The hardware or software includes one or more modules corresponding to the foregoing function. The modules may be software and/or hardware.

The terminal device includes:
a processing unit, configured to: determine a to-be-sent second data packet, and map, according to QoS indication information of the second data packet, the second data packet to a second DRB belonging to an EPS bearer, where the EPS bearer includes P DRBs, and P is an integer greater than or equal to 2; and
a sending unit, configured to send the second data packet to a base station by using the second DRB.

Because one EPS bearer includes a plurality of DRBs, the plurality of DRBs can satisfy different QoS requirements. Because a quantity of bearers is reduced while QoS requirements are satisfied, bearer setup signaling is reduced in a bearer setup procedure.

Optionally, QoS of the first DRB matches QoS indication information of a first data packet. The QoS indication information may be a specific QoS parameter (for example, a QCI or an MBR), or may be an index number (used to correspond to a group of QoS parameters in a QoS profile) of a QoS profile (QoS profile), or may be a single indicator requirement (for example, a latency requirement). That QoS of the first DRB matches QoS indication information of a first data packet means that indication information included in QoS of the first data packet is the same as at least one parameter in the QoS of the first DRB; or indication information included in QoS of the first data packet is the same as at least one indicator in the QoS of the first DRB. Because there may be many QoS requirements of data packets and QoS requirements greatly exceed a quantity of DRBs, data packet QoS can be satisfied as much as possible through mapping. In addition, no corresponding DRB is set up for each QoS requirement, so that resources can be saved.

Optionally, the terminal device further includes:
a receiving unit, configured to receive fourth signaling for configuring M DRBs, where the fourth signaling is used to instruct the terminal device to configure the M DRBs, M is a positive integer, the M DRBs are all in an inactive state, and the second DRB is one of the M DRBs. For a service corresponding to uncommon QoS, a DRB may not be activated after being configured and is activated after there is to-be-sent data. Because a DRB is not activated after being configured, no resource is occupied, thereby saving resources.

Optionally, the receiving unit is further configured to receive fifth signaling, where the fifth signaling instructs the terminal device to activate the second DRB. For a service corresponding to uncommon QoS, a DRB may not be activated after being configured and is activated after there is to-be-sent data. Because a DRB is not activated after being configured, no resource is occupied, thereby saving resources.

Optionally, the receiving unit is further configured to receive sixth signaling, where the sixth signaling is used to instruct the terminal device to set up the second DRB. The DRB is set up in advance, so that a waiting time of data sending can be reduced.

Optionally, if there is no DRB matching the second data packet, the sending unit is further configured to send the second data packet by using a default DRB. Because a DRB satisfying a QoS requirement of the first data packet cannot be found, the first data packet is sent by using the default DRB, so that system overheads can be reduced.

Optionally, the sending the second data packet by using a default DRB includes:
a header of the second data packet includes a request for setting up the second DRB; or
a header of the second data packet includes a request for activating the second DRB.

The header of the data packet includes indication information, used to request to activate or set up the DRB, so that signaling overheads can be reduced.

Optionally, the sending unit is further configured to send seventh signaling, where the seventh signaling is a request for activating or setting up the second DRB.

Optionally, the processing unit is further configured to activate the second DRB based on QoS of the to-be-sent second data packet. Because there is no signaling process for activating the DRB, the second DRB is activated by using the QoS of the second data packet, thereby reducing a data sending latency and signaling overheads.

Optionally, the second DRB includes a second logical channel, the second logical channel is mapped to a second transmission channel, the second transmission channel is one of a plurality of uplink transmission channels, and transmission channel types or configured physical transmission resources of at least two of the plurality of uplink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

According to an eighth aspect, an embodiment of this application provides a base station. The base station has a function of implementing behavior of the base station in the foregoing method design. The function may be implemented by hardware, or may be implemented by hardware executing corresponding software. The hardware or software includes one or more modules corresponding to the foregoing function.

The base station includes:
a receiving unit, configured to receive a second data packet from a terminal device; and
a processing unit, configured to map the second data packet to a second DRB based on an LCID, where the second DRB belongs to an EPS bearer, the EPS bearer includes P DRBs, and P is an integer greater than or equal to 2. Because one EPS bearer includes a plurality of DRBs, the plurality of DRBs can satisfy different QoS requirements. Because a quantity of bearers is reduced while QoS requirements are satisfied, bearer setup signaling is reduced in a bearer setup procedure.

Optionally, the base station further includes:
a sending unit, configured to send fourth signaling for configuring M DRBs to the terminal device, where the fourth signaling is used to instruct the terminal device to configure the M DRBs, M is a positive integer, the M DRBs are all in an inactive state, and the second DRB is one of the M DRBs. For a service corresponding to uncommon QoS, a DRB may not be activated after being configured and is activated after there is to-be-sent data. Because a DRB is not activated after being configured and is activated when there is a requirement, resource occupation of the base station and the terminal device is reduced.

Optionally, the sending unit is further configured to send fifth signaling to the terminal device, where the fifth signaling is used to instruct the terminal device to activate the second DRB. For a service corresponding to uncommon QoS, a DRB may not be activated after being configured and is activated after there is to-be-sent data. Because a DRB is not activated after being configured, no resource is occupied, thereby saving resources.

Optionally, the sending unit is further configured to send sixth signaling to the terminal device, where the sixth signaling is used to instruct the terminal device to set up the second DRB. The DRB is set up in advance, so that a waiting time of data sending can be reduced.

Optionally, the receiving unit is further configured to receive seventh signaling, where the seventh signaling is a request for activating or setting up the second DRB. The DRB is set up in advance, so that a waiting time of data sending can be reduced. A DRB is activated after there is to-be-sent data. Because a DRB is not activated after being configured and is activated when there is a requirement, resource occupation of the base station and the terminal device is reduced.

Optionally, the receiving unit is further configured to receive the second data packet by using a default DRB, where a header of the second data packet includes a request for setting up or activating the second DRB. The header of the data packet includes indication information, used to request to activate or set up the DRB, so that signaling overheads can be reduced.

Optionally, the second DRB includes a first logical channel, the first logical channel is mapped to a first transmission channel, the first transmission channel is one of a plurality of downlink transmission channels, and transmission channel types or configured physical transmission resources of at least two of the plurality of uplink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

In the fifth aspect to the eighth aspect, the sending unit may be a transmitter, the receiving unit may be a receiver, and the processing unit may be a processor.

An embodiment of the present invention further provides a system. The system includes the terminal device and the base station in the foregoing embodiments.

Compared with the prior art, in the solutions provided in this application, one EPS bearer includes a plurality of DRBs, so that the plurality of DRBs can satisfy different QoS requirements. In this way, a quantity of bearers is reduced and bearer setup signaling is reduced while a system QoS requirement is satisfied.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may derive other drawings from these accompanying drawings without creative efforts.
FIG. 1 is a schematic diagram of a PDN connection and bearers;
FIG. 2 is a schematic diagram of a transmission process of a downlink data flow;
FIG. 3 is a schematic flowchart of downlink data transmission according to an embodiment of the present invention;
FIG. 4 is a schematic diagram of a relationship between an E-RAB and a DRB according to an embodiment of the present invention;
FIG. 5 is a mapping diagram of a DRB and a transport channel according to an embodiment of the present invention;
FIG. 6 is a schematic flowchart of uplink data transmission according to an embodiment of the present invention;
FIG. 7a is a schematic structural diagram of a MAC CE (Media Access Control control element, Media Access Control control element) subheader of a BSR (buffer status report, buffer status report) according to an embodiment of the present invention;
FIG. 7b is a schematic structural diagram of a MAC CE payload of a BSR according to an embodiment of the present invention;
FIG. 8 is a schematic structural diagram of a payload of a MAC CE for activating a DRB according to an embodiment of the present invention;
FIG. 9 is a schematic block diagram of user equipment according to an embodiment of the present invention;
FIG. 10 is another schematic block diagram of user equipment according to an embodiment of the present invention;
FIG. 11 is a schematic block diagram of a base station according to an embodiment of the present invention;
FIG. 12 is another schematic block diagram of a base station according to an embodiment of the present invention;
FIG. 13 is a schematic block diagram of user equipment according to another embodiment of the present invention; and
FIG. 14 is a schematic block diagram of a base station according to another embodiment of the present invention.

### DESCRIPTION OF EMBODIMENTS

Network architectures and service scenarios described in the embodiments of the present invention aim to more clearly describe the technical solutions in the embodiments of the present invention, but are not intended to limit the technical solutions provided in the embodiments of the present invention. A person of ordinary skill in the art may know that as the network architectures evolve and a new service scenario emerges, the technical solutions provided in the embodiments of the present invention are also applicable to a similar technical problem.

It should be understood that, the technical solutions in the embodiments of the present invention may be applied to various communications systems, for example, a Long Term Evolution (long term evolution, LTE) system, an LTE frequency division duplex (frequency division duplex, FDD) system, and an LTE time division duplex (time division duplex, TDD) communications system.

It should be further understood that, in the embodiments of the present invention, a terminal device (terminal equipment) may be referred to as a terminal (terminal), user equipment (user equipment, UE), a mobile station (mobile station, MS), a mobile terminal (mobile terminal), a notebook computer, or the like. A terminal device may communicate with one or more core networks by using a radio access network (radio access network, RAN). For example, the terminal device may be a mobile phone (or referred to as a "cellular" phone) or a computer having a mobile terminal. For example, the terminal device may alternatively be a portable, pocket-sized, handheld, computer built-in, or in-vehicle mobile apparatus that exchanges voice and/or data with a radio access network.

In the embodiments of the present invention, a base station may be an evolved NodeB (evolved nodeB, "eNB or e-NodeB" for short) in an LTE system, a base station in an LTE 5G (fifth generation, fifth-generation) system, another base station, or an access network device such as a relay (relay). This is not limited in the present invention.

An embodiment of the present invention provides a solution based on a communications system shown in FIG. 1, to improve performance of services having different QoS. This embodiment of the present invention provides a communications system. The communications system includes at least at least one UE 10, an eNB 20, an SGW 30, a PGW 40, and a PDN 50. FIG. 1 is used as an example. The PDN 50 and the UE 10 establish a PDN connection. A direction in which a base station sends data to a terminal device is a downlink direction, and a direction in which a terminal device sends data to a base station is an uplink direction. In an LTE system, an IP (Internet Protocol, Internet Protocol) connection between a terminal device and a PDN (Packet Data Network, Packet Data Network) is referred to as a PDN connection or an EPS (Evolved Packet System, Evolved Packet System) session, and one PDN connection may include a plurality of EPS bearers between a PGW and a terminal device. Each EPS bearer includes three parts: a DRB (Data Radio Bearer, data radio bearer) between a terminal device and an eNB, an S1 bearer between an eNB (evolved nodeB, evolved NodeB) and an SGW (Serving Gateway), and an S5 bearer between an SGW and a PGW (PDN gateway), as shown in FIG. 1. In addition, a cascading combination of a DRB and an S 1 bearer is also referred to as an E-RAB, and the E-RAB, the DRB, and the EPS bearer are in a one-to-one correspondence.

QoS (quality of service, quality of service) management of data transmission is based on the EPS bearer, and each EPS bearer corresponds to a QoS requirement, that is, a group of QoS parameters including a QCI (QoS class identifier), an ARP (allocation and retention priority, allocation and retention priority), a GBR (guaranteed bit rate, guaranteed bit rate), an MBR (maximum bit rate, maximum bit rate), and the like. When a terminal device is registered with a network, a default EPS bearer satisfying a default QoS requirement is set up, the default QoS requirement is a part of subscription data of the terminal device, and the default EPS bearer is a non-GBR bearer. After the default EPS bearer is set up, uplink and downlink data of the terminal device is all transmitted on the EPS bearer. When the default QoS requirement cannot satisfy a requirement of the terminal device, the network sets up a dedicated EPS bearer for the terminal device, where the dedicated EPS bearer corresponds to another QoS requirement and may be a GBR bearer or a non-GBR bearer.

In a current LTE system, an E-RAB includes two parts: an S1 bearer and a DRB. For a downlink data flow, an IP data packet transmitted from the S1 bearer to a base station is directly mapped to a corresponding DRB. Each DRB includes independent PDCP (Packet Data Convergence Protocol, Packet Data Convergence Protocol) and RLC entities, and after being processed by the PDCP and RLC, the IP data packet becomes an SDU (service data unit, service data unit) on a logical channel corresponding to each DRB. SDUs on different logical channels are all processed at a MAC layer and form a MAC PDU based on a priority sequence of the logical channels, and the MAC PDU is transferred to a physical layer and the physical layer transmits the MAC PDU to the terminal device.

FIG. 2 is used as an example. In a downlink direction, the PDN 50 sends three IP data flows to the PGW 40 for the terminal device 10. The three IP data flows are marked as an IP data flow 1, an IP data flow 1, and an IP data flow 3. The PGW 40 first performs filtering classification processing on the three IP data flows, identifies different QoS requirements corresponding to the different IP data flows, and maps the IP data flows to different EPS bearers to transmit the IP data flows to the terminal device 10, for example, maps the IP data flows 1 and 2 to a default EPS bearer and maps the IP data flow 3 into a dedicated EPS bearer.

In an existing LTE system, QoS is bound with an EPS, and if data transmission requires new QoS, a network may establish an EPS bearer. However, setup of an EPS bearer is related to a plurality of network nodes, and an EPS bearer setup process is complex and network overheads are high.

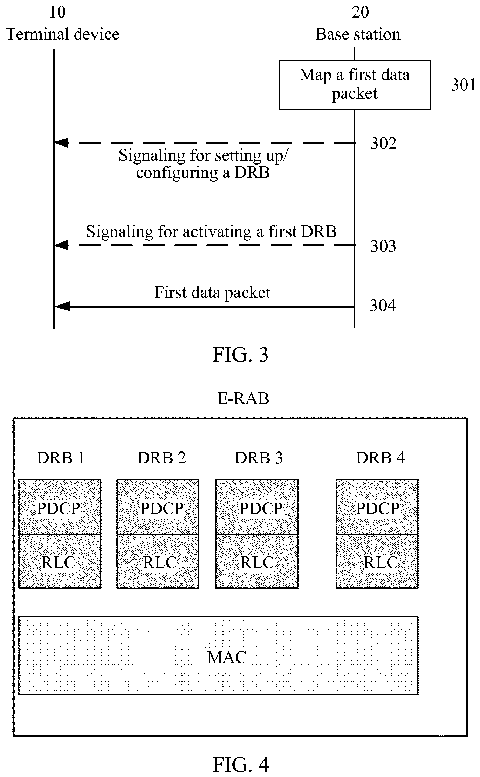

FIG. 3 is a schematic diagram of a downlink data transmission method according to an embodiment of the present invention. A base station in FIG. 3 may be the base station 20 in FIG. 1, and a terminal device in FIG. 3 may be the terminal device 10 in FIG. 1. As shown in FIG. 3, the method includes:
Step 301: The base station maps a first data packet.

In step 301, the base station determines the to-be-sent first data packet. The base station maps, according to QoS indication information of the first data packet, the first data packet to a first DRB belonging to an EPS bearer. The EPS bearer corresponds to N DRBs on an air interface, where N is greater than or equal to 2. There are a plurality of DRBs corresponding to one E-RAB on a base station side, and each DRB may correspond to a QoS profile, that is, a group of QoS parameters. As shown in FIG. 4, one E-RAB may be mapped to four DRBs that are a DRB 1, a DRB 2, a DRB 3, and a DRB 4 respectively. In FIG. 4, each DRB includes independent PDCP PDCP (Packet Data Convergence Protocol, Packet Data Convergence Protocol) and RLC (Radio Link Control, Radio Link Control) entities, and after being processed by the PDCP and RLC, the data packet becomes an SDU (service data unit, service data unit) on a logical channel corresponding to each DRB. A plurality of transmission channels are designed at a MAC layer for different QoS types. For example, the plurality of transmission channels include a highly-reliable transmission channel, a low-latency transmission channel, and a high-rate transmission channel. Because one EPS bearer includes a plurality of DRBs, the plurality of DRBs can satisfy different QoS requirements. Because a quantity of bearers is reduced while QoS requirements are satisfied, bearer setup signaling is reduced in a bearer setup procedure. For example, a terminal device may reserve only one non-GBR bearer to reduce a quantity of bearers, and a plurality of DRBs are reserved on an air interface side to ensure QoS of transmitting a data packet on the air interface side.

Optionally, the base station maps, according to QoS indication information of the first data packet, the first data packet to a first DRB belonging to a same EPS bearer. The mapping, by the base station according to QoS indication information of the first data packet, the first data packet to a first DRB belonging to an EPS bearer includes:
mapping the first data packet to the first DRB, where QoS of the first DRB matches the QoS indication information of the first data packet.

The QoS indication information may be a specific QoS parameter (for example, a QCI or an MBR), or may be an index number (used to correspond to a group of QoS parameters in a QoS profile) of a QoS profile (QoS profile). The QoS indication information may alternatively be an indicator requirement, for example, a latency requirement.

That QoS of the first DRB matches the QoS indication information of the first data packet may be that indication information included in QoS of the first data packet is the same as at least one parameter in the QoS of the first DRB. For example, it is only required that a QCI of the first data packet is the same as a QCI of the first DRB; or it is only required that a QCI and an MBR of the first data packet are the same as a QCI and an MBR of the first DRB. Alternatively, indication information included in QoS of the first data packet is the same as at least one indicator in the QoS of the first DRB. For example, a latency requirement of the first data packet is the same as a latency requirement of the first DRB. Alternatively, to map data packets having a plurality of QoS requirements to limited DRBs, if there is no corresponding bearer that matches most, a data packet may be mapped to a DRB having a QoS parameter or indicator of a higher criterion, for example, mapped to a DRB having a higher latency requirement or a DRB having a higher reliability requirement.

Because the base station and the terminal may have many QoS requirements of data packets and QoS requirements greatly exceed a quantity of DRBs, data packet QoS can be satisfied as much as possible through mapping. In addition, when the base station communicates with the terminal device, no corresponding DRB is set up for each QoS requirement, so that resources can be saved.

Optionally, the first DRB includes a first logical channel, the first logical channel is mapped to a first transmission channel, the first transmission channel is one of a plurality of downlink transmission channels, and transmission channel types of at least two of the plurality of downlink transmission channels are different, transmission channel transmission resources of at least two of the plurality of downlink transmission channels are different, or transmission channel configurations of at least two of the plurality of downlink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

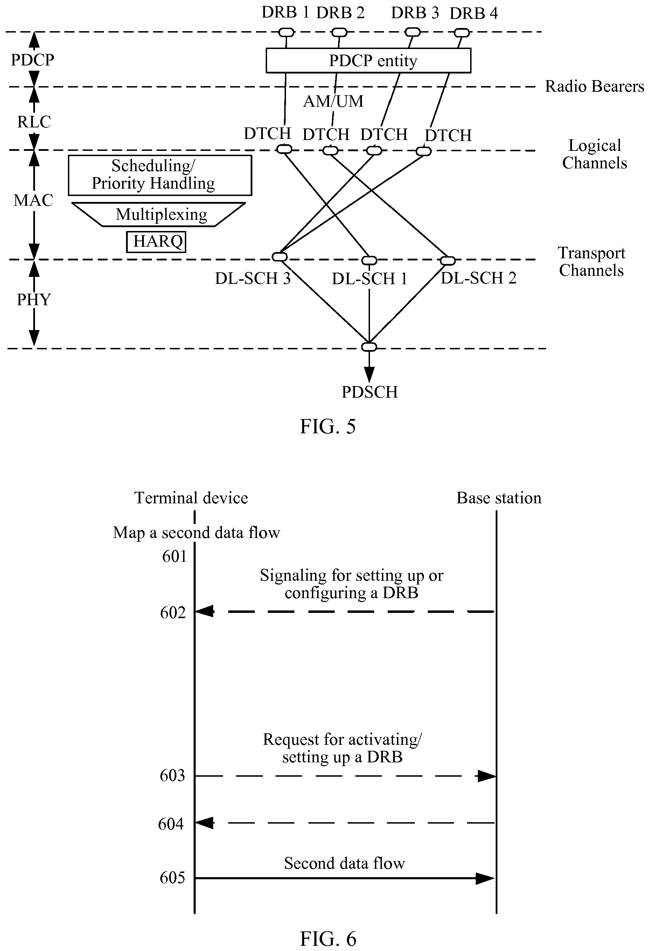

In the prior art, each DRB has independent PDCP and RLC entities and has independent logical channels, and logical channels corresponding to different DRBs are multiplexed on a same transmission channel at a MAC layer. In downlink data transmission, a plurality of DTCHs (dedicated traffic channel, dedicated traffic channel) are mapped to a same DL-SCH (Downlink shared channel, downlink shared channel). In this embodiment of the present invention, to provide transmission services having different QoS, a plurality of transmission channels are designed, and each transmission channel may correspond to a type of service, for example, an MBB (Mobile BroadBand, mobile broadband) service, where this service has a high-rate feature; an ultra-reliable and low latency service; and mMTC (Massive Machine Type Communication, massive machine type communication), where this service has a low-cost transmission feature. A DRB corresponds to a corresponding transmission channel. FIG. 5 is used as an example. The DRB 1 corresponds to a DL-SCH 1, the DRB 2 corresponds to a DL-SCH 2, the DRB 3 and the DRB 4 both correspond to a DL-SCH 3. Different transmission channels may have different air interface resources, for example, a time frequency resource and a code resource. Different transmission channels and DRBs may correspondingly satisfy different QoS requirements. That is, different transmission channels may satisfy services having different QoS requirements. Transmission configurations may be used to indicate different transmission channel features and satisfy different QoS requirements. An MBB transmission channel needs to support a high transmission rate, and one or more of a short period semi-static scheduling feature, a multi-beam aggregation transmission feature on a single carrier, a high transmission bandwidth feature, and an efficient channel encoding feature may be configured for the MBB transmission channel. A short TTI (short transmission time interval, short TTI) feature, a seamless soft switching feature, a larger quantity of HARQ retransmissions, and the like may be configured for an ultra-reliable and low latency transmission channel. A contention-based transmission feature and the like may be configured for an mMTC transmission channel. The foregoing transmission channel configurations may be preset or may be notified by using an RRC message. Descriptions of English in FIG. 5 are as follows:
PHY (physical layer, physical layer); MAC (Media Access Control, Media Access Control); and RLC (Radio Link Control, Radio Link Control);
PDCP (Packet Data Convergence Protocol, Packet Data Convergence Protocol);
scheduling/priority (scheduling/priority); and handling (handling);
HARQ (hybrid automatic repeat request, hybrid automatic repeat request);
DRB (data radio bearer, data radio bearer); and PDCP entity (PDCP entity);
AM (un-acknowledge mode)/UM (acknowledge mode, acknowledge mode); and DTCH (dedicated traffic channel, dedicated traffic channel);
DL-SCH (downlink shared channel, downlink shared channel);
PDSCH (physical downlink shared channel, physical downlink shared channel);
radio bearers (radio bearer); and
logical channel (logical channel); and transport channels (transport channel).

Optionally, the first data packet is an IP packet, and the IP packet carries QoS. The base station determines QoS based on at least one of a source IP address, a destination IP address, a source port number, a destination port number, and a protocol type. The IP packet carries the QoS, so that QoS may be flexibly set for IP.

Optionally, the QoS is indicated by at least a QCI and an ARP.

Optionally, an 8-bit service channel distinguishing field of an IP header carries the QoS. The IP header includes an 8-bit type of service information that is also referred to as service distinguishing information. 8 bits are sequentially PPPDTRCU from left to right, where PPP indicates a priority, D being 0 indicates a general latency, D being 1 indicates a low latency, T being 0 indicates a general throughput, T being 1 indicates a high throughput, R being 0 indicates general reliability, R being 1 indicates high reliability, C being 0 indicates common costs, C being 1 indicates low costs, and U is a reserved bit and is fixedly 0. Reusing an existing data structure can reduce complexity of the terminal device.

The base station may map DTR to QoS requirements of a low latency, a high rate, and high reliability of a wireless air interface respectively. The IP header may further include an IP option field having a variable length, or may be used to store QoS information including one or more of a QCI, an ARP, a GBR, and an MBR.

Optionally, the base station obtains corresponding QoS information based on IP 5-tuple information. IP 5-tuple is {a source IP address, a destination IP address, a source port number, a destination port number, a protocol type}. The source IP address, the destination IP address, and the protocol type are carried in the IP header, and the source port number and the destination port number are carried in a data payload (for example, a TCP or UDP header) of the IP header. The base station may determine a data packet type, for example, video data, voice data, or web page data, by identifying the IP 5-tuple information (including, but is not limited to determining, by using the source IP address, that the data packet is from a video resource server, determining that the data packet is a game by using the source port, and so on), and map the data packet to a corresponding DRB for transmission based on QoS criteria of different data types. The QoS criteria of the different data types may be notified to the base station by a core network device or may be obtained in a predefined manner.

Step 302: The base station sends DRB setup signaling or DRB configuration signaling.

In step 302, the base station sends the DRB setup signaling or the DRB configuration signaling to the terminal device. Setting up a DRB means that the terminal device needs to complete a complete DRB setup process, and configuring a DRB means that the terminal device only receives and stores a parameter of the DRB and performs no other operations. After the terminal device receives the signaling, if the signaling is the DRB setup signaling, the terminal device sets up the DRB on a terminal side after receiving the signaling. After being set up, the DRB is in an active state. If the signaling is the DRB configuration signaling, the terminal device stores the parameter of the DRB but does not activate the DRB.

Optionally, the base station sends first signaling for configuring M DRBs to the terminal device, where the first signaling is used to instruct the terminal device to configure the M DRBs, M is a positive integer, the M DRBs are all in an inactive state, and the first DRB is one of the M DRBs. For a service corresponding to uncommon QoS, a DRB may not be activated after being configured and is activated after there is to-be-sent data. Because a DRB is not activated after being configured, no resource is occupied, thereby saving resources. The first signaling sent by the base station to the terminal device indicates a parameter of each of the M DRBs, and a logical channel ID (logic channel ID, LCID) is allocated to each of the M DRBs. A DRB on the base station side may be subsequently associated with a DRB on a terminal device side by using the LCID. A data packet on a DRB having a same LCID as that of the DRB on the terminal device side is received on the DRB on the terminal device side. After receiving the first signaling, the terminal device configures the M DRBs, but only configures parameters for the M DRBs and does not activate the M DRBs. After being configured, the M DRBs are in an active state on the terminal device side.

Optionally, the base station sends third signaling to the terminal device after determining the to-be-sent first data packet, where the third signaling is used to instruct the terminal device to set up the first DRB. The DRB is set up in advance, so that a waiting time of data sending can be reduced. If the QoS requirement of the first data packet does not match a DRB that is currently already set up or to be activated, a new DRB may alternatively be set up, and a corresponding transmission channel feature and a corresponding transmission channel parameter are configured. The transmission channel feature may be a TTI length, for example, a TTI of two symbols; and the transmission channel parameter may be a quantity of HARQ retransmissions. The base station may flexibly configure the transmission channel feature and the transmission channel parameter.

After receiving the third signaling, the terminal device sets up the first DRB. After the terminal device completes setup of the first DRB, the first DRB is in an active state on the terminal device side.

Step 303: The base station sends signaling for activating a first DRB to a terminal device.

The terminal device receives the signaling for the first DRB and activates the first DRB.

Optionally, before the base station sends the first data packet to the terminal device by using the first DRB, when the first DRB is in the inactive state, the base station sends second signaling or a MAC SDU to the terminal device, where the second signaling or the MAC SDU is used to instruct the terminal to activate the first DRB, and a MAC subheader of the MAC SDU includes an LCID corresponding to the first DRB. The base station may send dedicated activation signaling after the first DRB is activated. During data transmission, the base station may ensure QoS by using a DRB configuration, and the DRB is not activated when the DRB is not used, thereby saving resources. The DRB is implicitly activated by sending data, thereby reducing signaling overheads. The second signaling may be RRC signaling (or carried by an RRC message), and the second signaling may alternatively be a dedicated MAC CE.

When the MAC SDU is used to activate the first DRB, an entity of the first DRB is first set up on the base station side, and the first data packet is sent by using a configuration of the first DRB. After receiving data, the terminal device can identify the LCID at the MAC layer to determine that the first DRB is in an inactive state. Then, the first DRB is immediately activated on the terminal device side.

Step 304: The base station sends a first data packet to the terminal device.

In step 304, the base station sends the first data packet to the terminal device by using the first DRB.

The terminal device receives the first data packet from the base station, and maps the first data packet to the first DRB based on the LCID, where the first DRB belongs to an EPS bearer, the EPS bearer includes N DRBs, and N is greater than or equal to 2. Because one EPS bearer includes a plurality of DRBs, the plurality of DRBs can satisfy different QoS requirements. In this way, a quantity of bearers and bearer setup signaling are reduced while QoS requirements are satisfied.

Optionally, when the base station maps the first data packet according to the QoS indication information of the first data packet, if there is no DRB matching the QoS indication information of the first data packet, the base station sends the first data packet by using a default DRB. Because a DRB satisfying a QoS requirement of the first data packet cannot be found, the first data packet is sent by using the default DRB, so that system overheads can be reduced. If there are a plurality of default DRBs, a DRB whose QoS parameter is nearest to a QoS parameter of the first data packet may be selected from the plurality of default DRBs to bear transmission of the first data packet. For example, a QCI of a selected default DRB is nearest to a QCI of the first data packet; a selected default DRB is nearest to one or more indicators of the first data packet, for example, the indicators are a latency and a bit error rate; or a default DRB whose service type is the same as that of the first data is selected.

Each non-GBR EPS bearer may have one or more default DRBs, and this depends on a QoS profile (QoS profile) sent by a core network to the base station, where the QoS profile refers to a QoS parameter set that needs to be supported.

Therefore, in the data transmission method in this embodiment of the present invention, one EPS bearer includes a plurality of DRBs, thereby reducing a quantity of bearers and bearer setup signaling. In addition, the plurality of DRBs can satisfy different QoS requirements.

FIG. 6 is a schematic diagram of an uplink data transmission method according to an embodiment of the present invention. A base station in FIG. 6 may be the base station 20 in FIG. 1, and a terminal device in FIG. 6 may be the terminal device 10 in FIG. 1. As shown in FIG. 6, the method includes:
Step 601: The terminal device maps a second data packet.

In step 601, the terminal device determines a to-be-sent second data packet, and maps, according to QoS indication information of the second data packet, the second data packet to a second DRB belonging to an EPS bearer, where the EPS bearer includes P DRBs, and P is an integer greater than or equal to 2. The terminal device sends the second data packet to the base station by using the second DRB. Because one EPS bearer includes a plurality of DRBs, a quantity of EPS bearers and EPS bearer setup signaling are reduced. In addition, the plurality of DRBs can satisfy different QoS requirements. FIG. 4 is a schematic diagram of a relationship between an E-RAB and a DRB. For specific descriptions of FIG. 4, refer to the descriptions of FIG. 4 in step 301.

The base station receives the second data packet from the terminal device, where the second data packet is mapped to the second DRB based on an LCID, and data is received on the second DRB. A DRB on a base station side may be associated with a DRB on a terminal device side by using the LCID. A data packet on a DRB having a same LCID as that of the DRB on the base station side may be received on the DRB on the base station side from the terminal device side.

Optionally, the mapping, by the terminal device according to QoS indication information of the second data packet, the second data packet to a second DRB includes:
mapping the second data packet to the second DRB, where QoS indication information of the second DRB matches the QoS indication information of the second data packet.

The QoS indication information may be a specific QoS parameter (for example, a QCI or an MBR), or may be an index number (used to correspond to a group of QoS parameters in a QoS profile) of a QoS profile (QoS profile). The QoS indication information may alternatively be an indicator requirement, for example, a latency requirement.

That QoS of the second DRB matches the QoS indication information of the second data packet may be that indication information included in QoS of the second data packet is the same as at least one parameter in the QoS of the second DRB. For example, it is only required that a QCI of the second data packet is the same as a QCI of the second DRB; or it is only required that a QCI and an MBR of the second data packet are the same as a QCI and an MBR of the second DRB. Alternatively, indication information included in QoS of the second data packet is the same as at least one indicator in the QoS of the second DRB. For example, a latency requirement of the second data packet is the same as a latency requirement of the second DRB. Alternatively, to map data packets having a plurality of QoS requirements to limited DRBs, if there is no corresponding bearer that matches most, the terminal device may map the data packet to a DRB having a QoS parameter or indicator of a higher criterion, for example, map the data packet to a DRB having a higher latency requirement or a DRB having a higher reliability requirement.

Because there may be many QoS requirements of data packets and QoS requirements greatly exceed a quantity of DRBs, data packet QoS can be satisfied as much as possible through mapping. In addition, on the base station side and the terminal device side, no corresponding DRB is set up for each QoS requirement, so that resources can be saved.

Optionally, the second DRB includes a second logical channel, the second logical channel is mapped to a second transmission channel, the second transmission channel is one of a plurality of uplink transmission channels, and transmission channel types or configured physical transmission resources of at least two of the plurality of uplink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

In the prior art, each DRB has independent PDCP and RLC entities and has independent logical channels, and logical channels corresponding to different DRBs are multiplexed on a same transmission channel at a MAC layer. In downlink data transmission, a plurality of DTCHs are mapped to a same DL-SCH (Downlink shared channel, downlink shared channel). In this embodiment of the present invention, to provide transmission services having different QoS, a plurality of transmission channels are designed, and each transmission channel may correspond to a type of service, for example, an MBB (Mobile BroadBand, mobile broadband) service, where this service has a high-rate feature; an ultra-reliable and low latency service; and mMTC (Massive Machine Type Communication, massive machine type communication), where this service has a low-cost transmission feature. A DRB corresponds to a corresponding transmission channel. FIG. 5 is used as an example. A DRB 1 corresponds to a DL-SCH 1, a DRB 2 corresponds to a DL-SCH 2, a DRB 3 and a DRB 4 both correspond to a DL-SCH 3. Different transmission channels may have different air interface resources, for example, a time frequency resource and a code resource. Different transmission channels and DRBs may correspondingly satisfy different QoS requirements. That is, different transmission channels may satisfy services having different QoS requirements. Transmission configurations may be used to indicate different transmission channel features and satisfy different QoS requirements. An MBB transmission channel needs to support a high transmission rate, and one or more of a short period semi-static scheduling feature, a multi-beam aggregation transmission feature on a single carrier, a high transmission bandwidth feature, and an efficient channel encoding feature may be configured for the MBB transmission channel. A short TTI (short transmission time interval) feature, a seamless soft switching feature, a larger quantity of HARQ retransmissions, and the like may be configured for an ultra-reliable and low latency transmission channel. A contention-based transmission feature and the like may be configured for an mMTC transmission channel. The foregoing transmission channel configurations may be preset or may be notified by using an RRC message.

Step 602: The terminal device receives DRB setup signaling or DRB configuration signaling.

In step 602, the terminal device receives the DRB setup signaling or the DRB configuration signaling sent by the base station. Setting up a DRB means that the terminal needs to complete a complete DRB setup process, and configuring a DRB means that the terminal device only receives and stores a parameter of the DRB and performs no other operations.

Optionally, the terminal device receives fourth signaling for configuring M DRBs, where the fourth signaling is used to instruct the terminal device to configure the M DRBs, M is a positive integer, the M DRBs are all in an inactive state, and the second DRB is one of the M DRBs. For a service corresponding to uncommon QoS, a DRB may not be activated after being configured and is activated after there is to-be-sent data. Because a DRB is not activated after being configured, no resource is occupied, thereby saving resources. The first signaling received by the terminal device indicates a parameter of each of the M DRBs, and a logical channel ID (logic channel ID, LCID) is allocated to each of the M DRBs. After receiving the first signaling, the terminal device stores the parameters, but does not immediately set up a corresponding DRB and sets up a corresponding DRB after the base station sends activation signaling, thereby saving resources.

Optionally, the terminal device receives sixth signaling, where the sixth signaling is used to instruct the terminal device to set up the second DRB. The DRB is set up in advance, so that a waiting time of data sending can be reduced. If the QoS requirement of the first data packet does not match a DRB that is currently already set up or to be activated, a new DRB may alternatively be set up for data transmission.

Step 603: The terminal device sends a request for activating/setting up a DRB.

Optionally, the terminal device sends seventh signaling, where the seventh signaling is a request for activating or setting up the second DRB.

After receiving the seventh signaling, the base station may determine, based on a cell load status and the like, whether to set up or activate the second DRB for the terminal device, thereby improving data transmission efficiency of an entire cell.

The seventh signaling may be an RRC message, or the seventh signaling may be carried by a MAC CE.

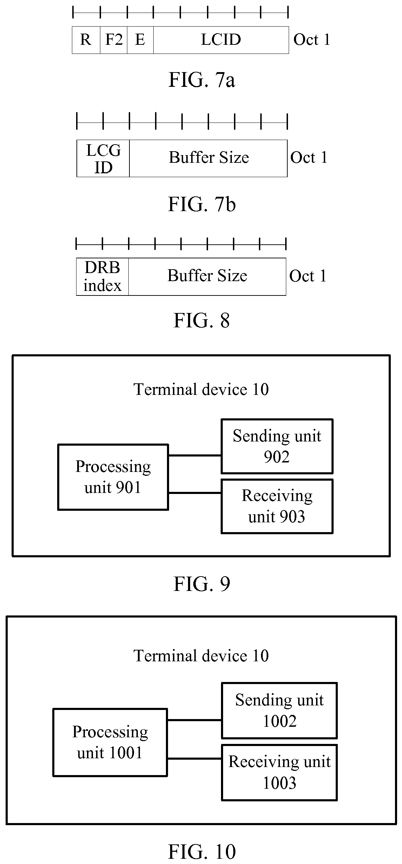

When the seventh signaling may be alternatively carried by a MAC CE, a design may be based on a BSR (Buffer Status Report, buffer status report) MAC CE in a current LTE system. A BSR structure in current LTE is shown in FIG. 7a and FIG. 7b. In FIG. 7a, a BSR includes two parts: a BSR subheader and a BSR payload. An LCID (Logic Channel ID, logical channel ID) of the BSR subheader is used to indicate that this is a BSR MAC CE. The BSR payload part indicates an LCGID and a to-be-transmitted data volume. A buffer size in FIG. 7a and FIG. 7b indicates a buffer size.

In this embodiment of the present invention, a subheader structure of a MAC CE used to request to set up or activate a DRB is the same as the BSR subheader, but a different LCID is defined to indicate that this is a MAC CE used to request to set up or activate a DRB.

If a payload part is an activation message, a DRB index may be included. Optionally, a to-be-sent data volume indication may be further included, as shown in FIG. 8. In FIG. 8, only an example in which the DRB index occupies two bits is used, and a quantity of bits occupied by the DRB index may be specified in advance.

If a payload part is a DRB setup message, the payload may include at least one of a service type indication, a QoS type indication, a specific QoS parameter, and an index number in a QoS profile, and optionally may further include a to-be-transmitted data volume indication. The service type indication or the QoS type indication may be an index number, and indicated content, an indicated specific service type, or an indicated QoS type may be predefined. If a DRB setup message includes a QoS parameter, the QoS parameter may be at least one of a QCI, a GBR, an ARP, and an MBR.

Some DRBs can be used after being set up, but some DRBs need to be first configured and then activated before being used. Whether a DRB needs to be activated before being used may be specified in a protocol or may be notified to the terminal device by the base station. For example, a DRB corresponding to an MBB service may be set to be activated by default, and may be used by UE after being set up. Because a DRB corresponding to an ultra-reliable and low latency service relates to use of a short TTI (Transmission Time Interval, transmission time interval), the UE may need to detect and send data in a new frame structure, and the DRB needs to be configured as activated before being used. Similarly, a DRB corresponding to an mMTC (Massive Machine Type Communication, massive machine type communication) service relates to a contention-based transmission mode, and the UE needs to select an available resource from a contention resource pool. To ensure a sending success rate in the contention mode, more precise resource management is required. Therefore, the DRB corresponding to the mMTC service also needs to be activated before being used.

For a DRB needing to be activated, a valid activation time may be further configured. It is considered that the DRB can be used within the activation time, and after the activation time is exceeded, the DRB needs to be activated again before being used. Alternatively, a timer is configured, each time the UE completes data sending by using a corresponding DRB, the timer resets and starts timing again, and if the timer expires, the corresponding DRB is set to be in an inactive state. In this case, if it is intended that data is sent by using a DRB, activation needs to be applied for again.

Step 604: The terminal device receives signaling that is used to activate/set up a DRB and that is sent by a base station.

In step 604, the terminal device receives the signaling that is used to activate/set up the second DRB and that is sent by the base station, and activates or sets up the second DRB signaling based on the signaling.

Optionally, the terminal device receives fifth signaling, where the fifth signaling instructs the terminal device to activate the second DRB. After receiving the fifth signaling, the terminal device activates the second DRB. For a service corresponding to uncommon QoS, a DRB may not be activated after being configured and is activated after there is to-be-sent data. Because a DRB is not activated after being configured, no resource is occupied, thereby saving resources.

Step 605: The terminal device sends a second data packet.

On the base station side, the base station receives the second data packet from the terminal device, and maps the second data packet to the second DRB based on an LCID, where the second DRB belongs to an EPS bearer, the EPS bearer includes P DRBs, and P is an integer greater than or equal to 2. Because one EPS bearer includes a plurality of DRBs, the plurality of DRBs can satisfy different QoS requirements. Because a quantity of bearers is reduced while QoS requirements are satisfied, bearer setup signaling is reduced in a bearer setup procedure.

Optionally, when the terminal device performs mapping between the second data packet and the second DRB according to the QoS indication information of the second data packet, if there is no DRB matching the second data packet, the second data packet is sent by using a default DRB. Because a DRB satisfying a QoS requirement of the first data packet cannot be found, the first data packet is sent by using the default DRB, so that system overheads can be reduced. If there are a plurality of default DRBs, a DRB whose QoS parameter is nearest to a QoS parameter of the first data packet may be selected from the plurality of default DRBs to bear transmission of the first data packet. For example, a QCI of a selected default DRB is nearest to a QCI of the first data packet; a selected default DRB is nearest to one or more indicators of the first data packet, for example, the indicators are a latency and a bit error rate; or a default DRB whose service type is the same as that of the first data is selected. Each non-GBR EPS bearer may have one or more default DRBs, and this depends on a QoS profile sent by a core network to the base station.

Optionally, the second data packet is sent by using a default DRB, and a header of the second data packet includes a request for setting up the second DRB.

Optionally, the second data packet is sent by using a default DRB, and a header of the second data packet includes a request for activating the second DRB.

In both the foregoing two manners, the header of the data packet includes indication information, used to request to activate or set up the DRB, so that signaling overheads can be reduced. A method for adding indication information to a data packet header is as follows:
1. The indication information is indicated in an RLC layer data header. If activation of a DRB is requested, two fields are added to an existing RLC data header. One field is an indication information field for requesting to activate a DRB, and occupies, for example, two bits (bit). The two bits being '00' indicates requesting to activate a DRB. The other field is a DRB index field, occupies, for example, six bits, and indicates an index number of a corresponding to-be-activated DRB. If setup of a DRB is requested, two fields are added to an existing RLC data header. One field is an indication information field for requesting to set up a DRB, and occupies, for example, two bits. The two bits being '01' indicates requesting to activate a DRB. The other field is a QoS indication field, occupies, for example, six bits, and indicates an index number of a corresponding requested QoS parameter. An index object is a group of QoS parameters in a QoS profile preconfigured for the UE. The field may alternatively directly indicate a QoS parameter, for example, a QCI.
2. The indication information is indicated in a PDCP layer data header. If activation of a DRB is requested, two fields are added to an existing PDCP data header. One field is an indication information field for requesting to activate a DRB, and occupies, for example, two bits (bit). The two bits being '00' indicates requesting to activate a DRB. The other field is a DRB index field, occupies, for example, six bits, and indicates an index number of a corresponding to-be-activated DRB. If setup of a DRB is requested, two fields are added to an existing PDCP data header. One field is an indication information field for requesting to set up a DRB, and occupies, for example, two bits. The two bits being '01' indicates requesting to activate a DRB. The other field is a QoS indication field, occupies, for example, six bits, and indicates an index number of a corresponding requested QoS parameter. An index object is a group of QoS parameters in a QoS profile preconfigured for the UE. The field may alternatively directly indicate a QoS parameter, for example, a QCI.

After receiving the request for setting up or activating the second DRB, the base station may determine, based on a cell load status and the like, whether to set up or activate the second DRB for the terminal device, thereby improving data transmission efficiency of an entire cell. If the base station determines to set up or activate the second DRB for the terminal device, the base station sends signaling for setting up or activating the second DRB to the terminal device; or sends a message for setting up or activating the second DRB.

Optionally, the terminal device activates the second DRB based on QoS of the to-be-sent second data packet, and sends the second data packet to the base station by using the second DRB. Because there is no signaling process for activating the DRB, the second DRB is activated by using the QoS of the second data packet, thereby reducing a data sending latency and signaling overheads. Specifically, after the UE determines that the second data packet needs to be sent, the UE selects a corresponding DRB based on the QoS requirement of the second data packet to perform a sending process. When a DRB selected based on a QoS mapping or matching rule is in an inactive state, the UE may first locally activate the DRB, and use corresponding PDCP and RLC entities to construct a MAC SDU. A MAC subheader corresponding to the MAC SDU includes an LCID corresponding to the DRB. After receiving the MAC SDU, the base station identifies, by using the LCID, that the DRB is an inactivated DRB, may learn that the DRB is already activated on the UE side, then may activate the DRB on the base station side, and receive the MAC SDU by using the DRB.

For a DRB, an LCID of the DRB is an identifier of the DRB. A DRB may be a bidirectional DRB, that is, the DRB is used for both downlink data transmission and uplink data transmission. A DRB may be a unidirectional DRB, that is, the DRB is used only for downlink data transmission or uplink data transmission. When the LCID of the first DRB in the embodiment in FIG. 3 is the same as the LCID of the second DRB in the embodiment in FIG. 4, the second DRB and the first DRB are one DRB and are a bidirectional DRB.

Therefore, in the data transmission method in this embodiment of the present invention, one EPS bearer includes a plurality of DRBs, thereby reducing a quantity of bearers and bearer setup signaling. In addition, the plurality of DRBs can satisfy different QoS requirements.

The foregoing describes the methods according to the embodiments of the present invention in detail with reference to FIG. 3 to FIG. 8, and the following describes the terminal device and the base station according to embodiments of the present invention in detail with reference to FIG. 9 to FIG. 12.

As shown in FIG. 9, an embodiment of the present invention provides the terminal device 10 shown in FIG. 1. The terminal device 10 includes:
a receiving unit 903, configured to receive a first data packet from a base station; and
a processing unit 901, configured to map the first data packet to a first DRB based on an LCID, where the first DRB belongs to an EPS bearer, the EPS bearer includes N DRBs, and N is an integer greater than or equal to 2. Because one EPS bearer includes a plurality of DRBs, the plurality of DRBs can satisfy different QoS requirements. In this way, a quantity of bearers and bearer setup signaling are reduced while QoS requirements are satisfied. A DRB on a base station side may be associated with a DRB on a terminal device side by using the LCID. A data packet on a DRB having a same LCID as that of the DRB on the terminal device side is received on the DRB on the terminal device side.

Optionally, the receiving unit 903 is further configured to receive first signaling for configuring M DRBs, where the first signaling is used to instruct the terminal device to configure M DRBs, M is a positive integer, the M DRBs are all in an inactive state, and the first DRB is one of the M DRBs. For a service corresponding to uncommon QoS, a DRB may not be activated after being configured and is activated after there is to-be-sent data, thereby saving resources.

Optionally, the receiving unit 903 is further configured to receive second signaling or a MAC SDU, where the second signaling or the MAC SDU is used to instruct the terminal device to activate the first DRB, a MAC subheader corresponding to the MAC SDU includes an LCID, and the LCID is used to indicate the first DRB. A DRB on the base station side may be associated with a DRB on the terminal device side by using the LCID. A data packet on a DRB having a same LCID as that of the DRB on the terminal device side is received on the DRB on the terminal device side. For a service corresponding to uncommon QoS, a DRB may not be activated after being configured and is activated after there is to-be-sent data. Because a DRB is not activated after being configured and is activated when there is a requirement, resource occupation of a memory and a timer (timer) of the terminal device can be reduced.

Optionally, the receiving unit 903 is further configured to receive third signaling, where the third signaling is used to instruct the terminal device to set up the second DRB. The DRB is set up in advance, so that a waiting time of data sending can be reduced.

Optionally, the first DRB includes a first logical channel, the first logical channel is mapped to a first transmission channel, the first transmission channel is one of a plurality of downlink transmission channels, and transmission channel types or configured physical transmission resources of at least two of the plurality of downlink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

For specific implementations of the processing unit and the sending unit of the terminal device, refer to the specific implementation of the terminal device in the foregoing method embodiments.

Therefore, in the data transmission terminal device in this embodiment of the present invention, one EPS bearer includes a plurality of DRBs, thereby reducing a quantity of bearers and bearer setup signaling. In addition, the plurality of DRBs can satisfy different QoS requirements.

As shown in FIG. 10, an embodiment of the present invention provides the terminal device 10 shown in FIG. 1. The terminal device 10 includes:
a processing unit 1001, configured to: determine a to-be-sent second data packet, and map, according to QoS indication information of the second data packet, the second data packet to a second DRB belonging to an EPS bearer, where the EPS bearer includes P DRBs, and P is an integer greater than or equal to 2; and
a sending unit 1002, configured to send the second data packet to a base station by using the second DRB.

Because one EPS bearer includes a plurality of DRBs, the plurality of DRBs can satisfy different QoS requirements. In this way, a quantity of bearers and bearer setup signaling are reduced while QoS requirements are satisfied.

Optionally, QoS of the second DRB matches the QoS indication information of the second data packet. The QoS indication information may be a specific QoS parameter (for example, a QCI or an MBR), or may be an index number (used to correspond to a group of QoS parameters in a QoS profile) of a QoS profile (QoS profile). The QoS indication information may alternatively be an indicator requirement, for example, a latency requirement.

That QoS of the second DRB matches the QoS indication information of the second data packet may be that indication information included in QoS of the second data packet is the same as at least one parameter in the QoS of the second DRB. For example, it is only required that a QCI of the second data packet is the same as a QCI of the second DRB; or it is only required that a QCI and an MBR of the second data packet are the same as a QCI and an MBR of the second DRB. Alternatively, indication information included in QoS of the second data packet is the same as at least one indicator in the QoS of the second DRB. For example, a latency requirement of the second data packet is the same as a latency requirement of the second DRB. Alternatively, to map data packets having a plurality of QoS requirements to limited DRBs, if there is no corresponding bearer that matches most, a data packet may be mapped to a DRB having a QoS parameter or indicator of a higher criterion, for example, mapped to a DRB having a higher latency requirement or a DRB having a higher reliability requirement.

Optionally, the terminal device further includes:
a receiving unit 1003, configured to receive fourth signaling for configuring M DRBs, where the fourth signaling is used to instruct the terminal device to configure the M DRBs, M is a positive integer, the M DRBs are all in an inactive state, and the second DRB is one of the M DRBs. For a service corresponding to uncommon QoS, a DRB may not be activated after being configured and is activated after there is to-be-sent data. Because a DRB is not activated after being configured, no resource is occupied, thereby saving resources.

Optionally, the receiving unit 1003 is further configured to receive fifth signaling, where the fifth signaling is used to instruct the terminal device to activate the second DRB. For a service corresponding to uncommon QoS, a DRB may not be activated after being configured and is activated after there is to-be-sent data. Because a DRB is not activated after being configured, no resource is occupied, thereby saving resources.

Optionally, the receiving unit 1003 is further configured to receive sixth signaling, where the sixth signaling is used to instruct the terminal device to set up the second DRB. The DRB is set up in advance, so that a waiting time of data sending can be reduced.

Optionally, if there is no DRB matching the second data packet, the sending unit 1002 is further configured to send the second data packet by using a default DRB. Because a DRB satisfying a QoS requirement of the first data packet cannot be found, the first data packet is sent by using the default DRB, so that system overheads can be reduced.

Optionally, the sending the second data packet by using a default DRB includes:
a header of the second data packet includes a request for setting up the second DRB; or
a header of the second data packet includes a request for activating the second DRB.

The header of the data packet includes indication information, used to request to activate or set up the DRB. In this manner, signaling overheads can be reduced.

Optionally, the sending unit 1002 is further configured to send seventh signaling, where the seventh signaling is a request for activating or setting up the second DRB.

Optionally, the processing unit 1001 is further configured to activate the second DRB based on QoS of the to-be-sent second data packet. Because there is no signaling process for activating the DRB, the second DRB is activated by using the QoS of the second data packet, thereby reducing a data sending latency and signaling overheads.

Optionally, the second DRB includes a second logical channel, the second logical channel is mapped to a second transmission channel, the second transmission channel is one of a plurality of uplink transmission channels, and transmission channel types or configured physical transmission resources of at least two of the plurality of uplink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

Therefore, in the data transmission terminal device in this embodiment of the present invention, one EPS bearer includes a plurality of DRBs, thereby reducing a quantity of bearers and bearer setup signaling. In addition, the plurality of DRBs can satisfy different QoS requirements.

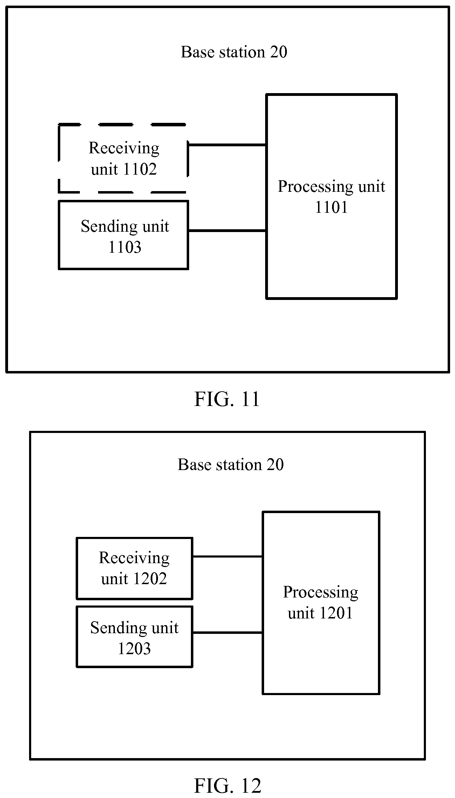

As shown in FIG. 11, an embodiment of the present invention provides the base station 20 shown in FIG. 1. The base station 20 includes:
a processing unit 1101, configured to: determine to-be-sent first data packet; and map, according to QoS indication information of the first data packet, the first data packet to a first DRB belonging to an EPS bearer, where the EPS bearer includes N DRBs, N is greater than or equal to 2, because one EPS bearer includes a plurality of DRBs, the plurality of DRBs can satisfy different QoS requirements, and because a quantity of bearers is reduced while QoS requirements are satisfied, bearer setup signaling is reduced in a bearer setup procedure; and
a sending unit 1103, configured to send the first data packet to a terminal device by using the first DRB.

Optionally, QoS of the first DRB matches the QoS indication information of the first data packet.

The QoS indication information may be a specific QoS parameter (for example, a QCI or an MBR), or may be an index number (used to correspond to a group of QoS parameters in a QoS profile) of a QoS profile (QoS profile). The QoS indication information may alternatively be an indicator requirement, for example, a latency requirement.

That QoS of the first DRB matches the QoS indication information of the first data packet may be that indication information included in QoS of the first data packet is the same as at least one parameter in the QoS of the first DRB. For example, it is only required that a QCI of the first data packet is the same as a QCI of the first DRB; or it is only required that a QCI and an MBR of the first data packet are the same as a QCI and an MBR of the first DRB. Alternatively, indication information included in QoS of the first data packet is the same as at least one indicator in the QoS of the first DRB. For example, a latency requirement of the first data packet is the same as a latency requirement of the first DRB. Alternatively, to map data packets having a plurality of QoS requirements to limited DRBs, if there is no corresponding bearer that matches most, a data packet may be mapped to a DRB having a QoS parameter or indicator of a higher criterion, for example, mapped to a DRB having a higher latency requirement or a DRB having a higher reliability requirement.

Because there may be many QoS requirements of data packets and QoS requirements greatly exceed a quantity of DRBs, data packet QoS can be satisfied as much as possible through mapping. In addition, no corresponding DRB is set up for each QoS requirement, so that resources can be saved.

Optionally, the sending unit 1103 is further configured to: when the processor maps the first data packet according to the QoS indication information of the first data packet, if there is no DRB matching QoS of the first data packet, send the first data packet by using a default DRB. Because a DRB satisfying a QoS requirement of the first data packet cannot be found, the first data packet is sent by using the default DRB, so that system overheads can be reduced.

Optionally, the sending unit 1103 is further configured to send first signaling for configuring M DRBs to the terminal device, where the first signaling is used to instruct the terminal device to configure the M DRBs, M is a positive integer, the M DRBs are all in an inactive state, and the first DRB is one of the M DRBs. For a service corresponding to uncommon QoS, a DRB may not be activated after being configured and is activated after there is to-be-sent data. Because a DRB is not activated after being configured and is activated when there is a requirement, resource occupation of a memory and a timer (timer) of the terminal device can be reduced.

Optionally, when the first DRB is in the inactive state, the sending unit is further configured to send second signaling or a MAC SDU to the terminal device, where the second signaling or the MAC SDU is used to activate the first DRB, a MAC subheader corresponding to the MAC SDU includes an LCID, and the LCID is used to indicate the first DRB. A DRB on a base station side may be associated with a DRB on a terminal device side by using the LCID. A data packet on a DRB having a same LCID as that of the DRB on the terminal device side is received on the DRB on the terminal device side. For a service corresponding to uncommon QoS, a DRB may not be activated after being configured and is activated after there is to-be-sent data. Because a DRB is not activated after being configured and is activated when there is a requirement, resource occupation of a memory and a timer (timer) of the terminal device can be reduced.

Optionally, the sending unit 1103 is further configured to send third signaling to the terminal device, where the third signaling is used to instruct the terminal device to set up the first DRB. The DRB is set up in advance, so that a waiting time of data sending can be reduced.

Optionally, the first DRB includes a first logical channel, the first logical channel is mapped to a first transmission channel, the first transmission channel is one of a plurality of downlink transmission channels, and transmission channel types or configured physical transmission resources of at least two of the plurality of downlink transmission channels are different. A transmission channel type refers to a transmission channel corresponding to a specific service type. The transmission resource may be a time frequency resource at a physical layer. A configuration of the transmission channel may be a quantity of retransmissions, timer expiration setting, or the like. Data transmission QoS can be ensured by using different resource (time frequency resource) or transmission configurations (a quantity of retransmissions, timer expiration setting, or the like) at the physical layer.

For specific implementations of the processing unit and the sending unit of the base station, refer to the specific implementation of the base station in the foregoing method embodiments.

Therefore, in the data transmission base station in this embodiment of the present invention, one EPS bearer includes a plurality of DRBs, thereby reducing a quantity of bearers and bearer setup signaling. In addition, the plurality of DRBs can satisfy different QoS requirements.

As shown in FIG. 12, an embodiment of the present invention provides the base station 20 shown in FIG. 1. The base station 20 includes:
a receiving unit 1202, configured to receive a second data packet from a terminal device; and
a processing unit 1201, configured to map the second data packet to a second DRB based on an LCID, where the second DRB belongs to an EPS bearer, the EPS bearer includes P DRBs, and P is an integer greater than or equal to 2. Because one EPS bearer includes a plurality of DRBs, the plurality of DRBs can satisfy different QoS requirements. In this way, a quantity of bearers and bearer setup signaling are reduced while a QoS requirement is satisfied.

Optionally, the base station further includes:
a sending unit 1203, configured to send fourth signaling for configuring M DRBs to the terminal device, where the fourth signaling is used to instruct the terminal device to configure the M DRBs, M is a positive integer, the M DRBs are all in an inactive state, and the second DRB is one of the M DRBs. For a service corresponding to uncommon QoS, a DRB may not be activated after being configured and is activated after there is to-be-sent data. Because a DRB is not activated after being configured and is activated when there is a requirement, resources of the base station and the terminal device are saved.

Optionally, the sending unit 1203 is further configured to send fifth signaling to the terminal device, where the fifth signaling is used to instruct the terminal device to activate the second DRB. For a service corresponding to uncommon QoS, a DRB may not be activated after being configured and is activated after there is to-be-sent data. Because a DRB is not activated after being configured, no resource is occupied, thereby saving resources.

Optionally, the sending unit 1203 is further configured to send sixth signaling to the terminal device, where the sixth signaling is used to instruct the terminal device to set up the second DRB. The DRB is set up in advance, so that a waiting time of data sending can be reduced.

Optionally, the receiving unit 1203 is further configured to receive seventh signaling, where the seventh signaling is a request for activating or setting up the second DRB. The DRB is set up in advance, so that a waiting time of data sending can be reduced. A DRB is activated after there is to-be-sent data. Because a DRB is not activated after being configured and is activated when there is a requirement, resource occupation of a memory and a timer (timer) of the terminal device can be reduced.

Optionally, the receiving unit 1202 is further configured to receive the second data packet by using a default DRB, where a header of the second data packet includes a request for setting up or activating the second DRB. The header of the data packet includes indication information, used to request to activate or set up the DRB. In this manner, signaling overheads can be reduced.

Optionally, the second DRB includes a first logical channel, the first logical channel is mapped to a first transmission channel, the first transmission channel is one of a plurality of downlink transmission channels, and transmission channel types or configured physical transmission resources of at least two of the plurality of uplink transmission channels are different. For specific implementations of the processing unit and the sending unit of the base station, refer to the specific implementation of the base station in the foregoing method embodiments.

Therefore, in the data transmission base station in this embodiment of the present invention, one EPS bearer includes a plurality of DRBs, thereby reducing a quantity of bearers and bearer setup signaling. In addition, the plurality of DRBs can satisfy different QoS requirements.

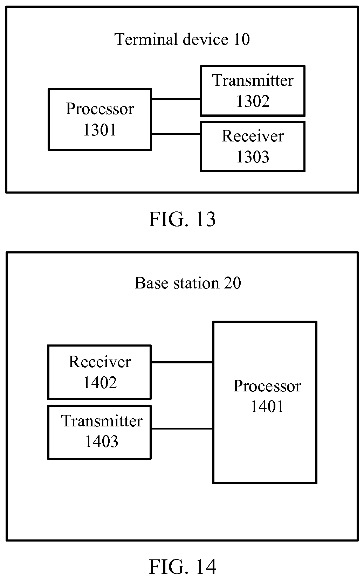

A terminal device 10 including a processor 1301, a transmitter 1302, and a receiver 1303 is shown in FIG. 13. A base station 20 including a processor 1402, a transmitter 1403, and a receiver 1401 is shown in FIG. 14.

The processing unit 901 and the processing unit 1001 may be specifically the processor 1301; the sending unit 902 and the sending unit 1002 may be the transmitter 1302; and the receiving unit 903 and the receiving unit 1003 may be the receiver 1303. The processing unit 1101 and the processing unit 1201 may be specifically the processor 1401; the receiving unit 1102 and the receiving unit 1202 may be the receiver 1402; and the sending unit 1103 and the sending unit 1203 may be the transmitter 1302.

In the embodiments of this application, one DRB supports one QoS. Optionally, one DRB may support a plurality of QoS, and each QoS is supported by a QoS pipe. In this case, a function of a QoS pipe is the same as a function of a DRB in the foregoing embodiments of this application.

It should be understood that in this embodiment of the present invention, the processors 1301 and 1401 may each be a central processing unit (Central Processing Unit, "CPU" for short), or the processors 1301 and 1401 may each be another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may be any conventional processor or the like.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A data transmission method, comprising:
determining, by a base station, to-be-sent first data packet;
mapping, by the base station according to QoS (quality of service) indication information of the first data packet, the first data packet to a first DRB belonging to an EPS (evolved packet system) bearer, wherein the EPS bearer comprises N DRBs (data radio bearer), and N is an integer greater than or equal to 2; and
sending, by the base station, the first data packet to a terminal device by using the first DRB.

2. The method according to claim 1, wherein the mapping, by the base station according to QoS indication information of the first data packet, the first data packet to a first DRB belonging to an EPS bearer comprises:
mapping the first data packet to the first DRB, wherein QoS of the first DRB matches the QoS indication information of the first data packet.

3. The method according to claim 1 or 2, wherein when the base station maps the first data packet according to the QoS indication information of the first data packet, if there is no DRB matching the QoS indication information of the first data packet, the first data packet is sent by using a default DRB.

4. The method according to any one of claims 1 to 3, wherein the base station sends first signaling for configuring M DRBs to the terminal device, the first signaling is used to instruct the terminal device to configure the M DRBs, M is a positive integer, the M DRBs are all in an inactive state, and the first DRB is one of the M DRBs.

5. The method according to any one of claims 1 to 4, wherein when the first DRB is in the inactive state, the base station sends second signaling or a MAC SDU (Media Access Control service data unit) to the terminal device, wherein the second signaling or the MAC SDU is used to activate the first DRB, a MAC subheader corresponding to the MAC SDU comprises an LCID (logical channel identifier), and the LCID is used to indicate the first DRB.

6. A data transmission method, comprising:
receiving, by a terminal device, a first data packet from a base station, and mapping the first data packet to a first DRB (data radio bearer) based on an LCID (logical channel identifier), wherein the first DRB belongs to an EPS (evolved packet system) bearer, the EPS bearer comprises N DRBs, and N is an integer greater than or equal to 2.

7. The method according to claim 6, wherein the terminal device receives first signaling for configuring M DRBs, the first signaling is used to instruct the terminal device to configure the M DRBs, M is a positive integer, the M DRBs are all in an inactive state, and the first DRB is one of the M DRBs.

8. The method according to claim 6 or 7, wherein the terminal device receives second signaling or a MAC SDU (Media Access Control service data unit), the second signaling or the MAC SDU is used to instruct the terminal device to activate the first DRB, a MAC subheader corresponding to the MAC SDU comprises an LCID, and the LCID is used to indicate the first DRB.

9. A data transmission method, comprising:
determining, by a terminal device, a to-be-sent second data packet, and mapping, according to QoS (quality of service) indication information of the second data packet, the second data packet to a second DRB (data radio bearer) belonging to an EPS bearer, wherein the EPS bearer comprises P DRBs, and P is an integer greater than or equal to 2; and
sending, by the terminal device, the second data packet to a base station by using the second DRB.

10. The method according to claim 9, wherein the mapping, by the terminal device according to QoS indication information of the second data packet, the second data packet to a second DRB comprises:
mapping the second data packet to the second DRB, wherein QoS indication information of the second DRB matches the QoS indication information of the second data packet.

11. The method according to claim 9 or 10, wherein the terminal device receives fourth signaling for configuring M DRBs, the fourth signaling is used to instruct the terminal device to configure the M DRBs, M is a positive integer, the M DRBs are all in an inactive state, and the second DRB is one of the M DRBs.

12. The method according to claim 9 or 10, wherein the terminal device receives fifth signaling, and the fifth signaling instructs the terminal device to activate the second DRB.

13. The method according to claim 9, wherein when the terminal device performs mapping between the second data packet and the second DRB according to the QoS indication information of the second data packet, if there is no DRB matching the second data packet, the second data packet is sent by using a default DRB.

14. The method according to claim 13, wherein the sending the second data packet by using a default DRB comprises:
a header of the second data packet comprises a request for setting up the second DRB; or
a header of the second data packet comprises a request for activating the second DRB.

15. The method according to any one of claims 9 to 14, wherein the terminal device sends seventh signaling, and the seventh signaling is a request for activating or setting up the second DRB.

16. The method according to any one of claims 9 to 13, wherein the terminal device activates the second DRB based on QoS of the to-be-sent second data packet.

17. A data transmission method, comprising:
receiving, by a base station, a second data packet from a terminal device, and mapping the second data packet to a second DRB (data radio bearer) based on an LCID (logical channel identifier), wherein the second DRB belongs to an EPS bearer, the EPS (evolved packet system) bearer comprises P DRBs, and P is an integer greater than or equal to 2.

18. The method according to claim 17, wherein the base station sends fourth signaling for configuring M DRBs to the terminal device, the fourth signaling is used to instruct the terminal device to configure the M DRBs, M is a positive integer, the M DRBs are all in an inactive state, and the second DRB is one of the M DRBs.

19. The method according to claim 17 or 18, wherein the base station sends fifth signaling to the terminal device, and the fifth signaling is used to instruct the terminal device to activate the second DRB.

20. The method according to claim 17, wherein the base station receives seventh signaling, and the seventh signaling is a request for activating or setting up the second DRB.

21. A base station, comprising:
a processing unit, configured to: determine to-be-sent first data packet; and map, according to QoS indication information of the first data packet, the first data packet to a first DRB belonging to an EPS bearer, wherein the EPS bearer comprises N DRBs, and N is greater than or equal to 2; and
a sending unit, configured to send the first data packet to a terminal device by using the first DRB.

22. The base station according to claim 21, wherein QoS of the first DRB matches the QoS indication information of the first data packet.

23. The base station according to claim 21 or 22, wherein
the sending unit is further configured to: when the processor maps the first data packet according to the QoS indication information of the first data packet, if there is no DRB matching QoS of the first data packet, send the first data packet by using a default DRB.

24. The base station according to any one of claims 21 to 23, wherein the sending unit is further configured to send first signaling for configuring M DRBs to the terminal device, the first signaling is used to instruct the terminal device to configure the M DRBs, M is a positive integer, the M DRBs are all in an inactive state, and the first DRB is one of the M DRBs.

25. The base station according to any one of claims 21 to 24, wherein when the first DRB is in the inactive state, the sending unit is further configured to send second signaling or a MAC SDU (Media Access Control service data unit) to the terminal device, wherein the second signaling or the MAC SDU is used to activate the first DRB, a MAC subheader corresponding to the MAC SDU comprises an LCID, and the LCID is used to indicate the first DRB.

26. A terminal device, comprising:
a receiving unit, configured to receive a first data packet from a base station; and
a processing unit, configured to map the first data packet to a first DRB (data radio bearer) based on an LCID (logical channel identifier), wherein the first DRB belongs to an EPS (evolved packet system) bearer, the EPS bearer comprises N DRBs, and N is an integer greater than or equal to 2.

27. The terminal device according to claim 26, wherein the receiving unit is further configured to receive first signaling for configuring M DRBs, the first signaling is used to instruct the terminal device to configure the M DRBs, M is a positive integer, the M DRBs are all in an inactive state, and the first DRB is one of the M DRBs.

28. The terminal device according to claim 26 or 27, wherein the receiving unit is further configured to receive second signaling or a MAC SDU (Media Access Control service data unit), the second signaling or the MAC SDU is used to instruct the terminal device to activate the first DRB, a MAC subheader corresponding to the MAC SDU comprises an LCID, and the LCID is used to indicate the first DRB.

29. A terminal device, comprising:
a processing unit, configured to: determine a to-be-sent second data packet, and map, according to QoS (quality of service) indication information of the second data packet, the second data packet to a second DRB belonging to an EPS (evolved packet system) bearer, wherein the EPS bearer comprises P DRBs (data radio bearer), and P is an integer greater than or equal to 2; and
a sending unit, configured to send the second data packet to a base station by using the second DRB.

30. The terminal device according to claim 29, wherein QoS of the second DRB matches the QoS indication information of the second data packet.

31. The terminal device according to claim 29 or 30, further comprising:
a receiving unit, configured to receive fourth signaling for configuring M DRBs, wherein the fourth signaling is used to instruct the terminal device to configure the M DRBs, M is a positive integer, the M DRBs are all in an inactive state, and the second DRB is one of the M DRBs.

32. The terminal device according to claim 29 or 30, further comprising: the receiving unit, further configured to receive fifth signaling, wherein the fifth signaling instructs the terminal device to activate the second DRB.

33. The terminal device according to any one of claims 29 to 32, wherein if there is no DRB matching the second data packet, the sending unit is further configured to send the second data packet by using a default DRB.

34. The terminal device according to claim 29, wherein the sending the second data packet by using a default DRB comprises:
a header of the second data packet comprises a request for setting up or activating the second DRB.

35. The terminal device according to any one of claims 29 to 34, wherein the sending unit is further configured to send seventh signaling, wherein the seventh signaling is a request for activating or setting up the second DRB.

36. The terminal device according to any one of claims 29 to 33, wherein the processing unit is further configured to activate the second DRB based on QoS of the to-be-sent second data packet.

37. A base station, comprising:
a receiving unit, configured to receive a second data packet from a terminal device; and
a processing unit, configured to map the second data packet to a second DRB (data radio bearer) based on an LCID (logical channel identifier), wherein the second DRB belongs to an EPS (evolved packet system) bearer, the EPS bearer comprises P DRBs, and P is an integer greater than or equal to 2.

38. The base station according to claim 37, further comprising:
a sending unit, configured to send fourth signaling for configuring M DRBs to the terminal device, wherein the fourth signaling is used to instruct the terminal device to configure the M DRBs, M is a positive integer, the M DRBs are all in an inactive state, and the second DRB is one of the M DRBs.

39. The base station according to claim 37 or 38, wherein the sending unit is further configured to send fifth signaling to the terminal device, wherein the fifth signaling is used to instruct the terminal device to activate the second DRB.

40. The base station according to any one of claims 37 to 39, wherein the receiving unit is further configured to receive seventh signaling, wherein the seventh signaling is a request for activating or setting up the second DRB.
